# EUROPÄISCHE PATENTSCHRIFT

(11) **EP 3 589 867 B1**
(45) Veröffentlichungstag und Bekanntmachung des Hinweises auf die Patenterteilung: **15.11.2023**
(21) Anmeldenummer: 18709982.5
(22) Anmeldetag: 01.03.2018
(51) Int. Cl.: F16D 65/00, F16D 25/08, F16J 3/04, F16J 15/52, F16D 55/226, F16D 65/18, F16D 125/08

(54) **FALTENBALG SOWIE MINDESTENS EINEN FALTENBALG AUFWEISENDE SCHEIBENBREMSE**
BELLOWS, AND AT LEAST ONE DISK BRAKE HAVING A BELLOWS
SOUFFLET AINSI QUE FREIN À DISQUE COMPORTANT AU MOINS UN SOUFFLET

(30) Priorität: 03.03.2017 DE 102017104442
(43) Veröffentlichungstag der Anmeldung: 08.01.2020
(73) Patentinhaber: KNORR-BREMSE Systeme für Nutzfahrzeuge GmbH, 80809 München (DE)
(72) Erfinder: HASSANI, Akbar, 81247 München (DE); WEBER, Ralf, 80997 München (DE)
(86) Internationale Anmeldenummer: PCT/EP2018/055092
(87) Internationale Veröffentlichungsnummer: WO 2018/158390

(56) Entgegenhaltungen:
- EP-A1- 1 972 821
- WO-A1-2016/116096
- DE-A1-102013 006 859
- US-A1- 2016 186 827

## Beschreibung

Die Erfindung betrifft einen Faltenbalg nach dem Oberbegriff des Anspruchs 1 sowie eine mindestens einen Faltenbalg aufweisende Scheibenbremse.

Der Einsatz solcher Faltenbälge insbesondere in Scheibenbremsen für ein Nutzfahrzeug ist hinlänglich bekannt. Beispielhaft wird hierzu auf die DE 103 31 929 B3 verwiesen.

Zum Schutz von im Bremssattel positionierten funktionsrelevanten Bauteilen, wie einer Zuspann- oder Nachstelleinrichtung vor Korrosion durch Witterungseinflüsse, ist der Bremssattel im Durchtrittsbereich von Stellspindeln gegenüber der Umgebung abgedichtet, wozu, entsprechend der genannten Literatur, als Dichtelement jeder Stellspindel ein Faltenbalg zugeordnet ist, der einerseits an der Stellspindel oder einem damit in Wirkverbindung stehenden, an einem zuspannseitigen Bremsbelag anliegenden Druckstück und andererseits an einer Verschlussplatte befestigt ist, die den Innenraum des Bremssattels verschließt.

Dabei wird der Faltenbalg mit seinem durchmessergrößeren, formstabilen Endring in die Verschlussplatte eingepresst und reibschlüssig gehalten. Bei Verzicht auf die Verschlussplatte kann der Faltenbalg direkt am Bremssattel befestigt sein, vorzugsweise ebenfalls eingepresst.

Dem Verschleiß der Bremsbeläge sowie der Bremsscheibe folgend werden die Stellspindeln mittels der erwähnten Nachstelleinrichtung zur Bremsscheibe hin bewegt, wobei der Faltenbalg seine Dichtfunktion über den gesamten Nachstellweg der Stellspindel gewährleisten muss.

Aufgrund des zur Verfügung stehenden Verschleißmaßes vollführt die Stellspindel bei der verschleißbedingten Nachstellung einen entsprechend großen Verfahrweg, gleichermaßen der zugeordnete Faltenbalg, wobei dieser einen Hub > 50 mm ausgleichen soll.

Um einen derart großen Hub zu ermöglichen, weist der Faltenbalg mehrere Faltungen auf, deren Anzahl jedoch durch den zur Verfügung stehenden Bauraum begrenzt ist. Zur Erreichung des gewünschten Hubes wird die Höhe der Flanken entsprechend dimensioniert.

Probleme ergeben sich jedoch daraus, dass zumindest ein Teil der Flanken während des Ausfahrens des zweiten, durchmesserkleineren Endrings, der an der Stellspindel oder am Druckstück angeschlossen ist, sich verformen bzw. verbiegen kann, so dass die Höhe der Flanken sozusagen in Streckstellung derart groß wird, dass sie instabil werden und von ihrer Kreisform abweichen. Dabei knicken diese gestreckten Flanken an mehreren Stellen und bilden eine mehreckige Form aus, deren Spitzen benachbarte Bauteile berühren, was zu Abrasion und Verschleiß führt.

Dies ist vor allem dann besonders stark ausgeprägt, wenn der Bauraum besonders klein ist.

Da bei jeder Bremsung der Faltenbalg bis zu 4 mm in axialer Richtung bewegt wird, kommt es während der Betriebsdauer der Scheibenbremse, d.h. bis zur Verschleißgrenze der beteiligten Bauteile, zu reibenden Kontakten mit den benachbarten Flächen mit der Folge, dass sich undichte Stellen herausbilden, was in letzter Konsequenz zu einem Versagen der Bremse führen kann.

Überdies ist ein Austausch des Faltenbalges abweichend von standardisierten Wartungsarbeiten beschwerlich, da die Faltenbälge bei eingebauter Scheibenbremse nur schwer zugänglich sind.

Aus der US 2016/0186 827 A1 ist ein Faltenbalg bekannt, der, entgegen der Gattung, mehr als jedem Endring zugeordnete zwei gegensinnig verlaufende Flanken aufweist, wobei die Oberkanten der Endringe auf den sich gegenüberliegenden freien Stirnseiten angeordnet sind.

Eine vergleichbare Ausgestaltung des Faltenbalges ist der WO 2016/116 096 A1 zu entnehmen, ebenso der EP 1 972 821 A1.

Eine der eingangs genannten DE 103 31 929 B3 vergleichbare Ausbildung des Faltenbalges ist in der DE 10 2013 006 859 A1 offenbart.

Der Erfindung liegt die Aufgabe zugrunde, einen Faltenbalg der gattungsgemäßen Art so weiterzuentwickeln, dass seine Funktionssicherheit und Standzeit verbessert wird.

Diese Aufgabe wird durch einen Faltenbalg mit den Merkmalen des Anspruchs 1 gelöst.

Durch diese konstruktive Ausgestaltung des Faltenbalges wird gewährleistet, dass insbesondere bei dessen Strecken die vorgegebene kreisrunde Kontur der einzelnen Faltungen beibehalten wird. Die Gefahr einer seitlichen Auslenkung der Faltungen, d.h. der Kehren, unter Ausbildung einer von der Kreisform abweichenden Kontur, wie zum Stand der Technik beschrieben, wird damit wirksam verhindert.

Vor allem beim Einsatz eines solchen Faltenbalges in einer Schiebesattel-Scheibenbremse ergeben sich dadurch deutliche Vorteile, vornehmlich eine Erhöhung der Standzeit, da Faltungen nun nicht mehr in Kontakt mit benachbarten Bauteilen kommen können.

Ein vorzeitiger Austausch der Faltenbälge ist daher nicht mehr erforderlich, so dass sich insgesamt hinsichtlich der Betriebskosten eine Optimierung ergibt, wobei zu berücksichtigen ist, dass Nutzfahrzeuge jeweils mit einer Vielzahl von Scheibenbremsen bestückt sind.

Nach einer vorteilhaften Weiterbildung des erfindungsgemäßen Faltenbalges beträgt der axiale Abstand zwischen der freien Oberkante des zweiten Endringes und der diesem zugewandten Kante des ersten Endringes in entspannter Stellung des Faltenbalges, d.h. vor einer Montage, vorzugsweise 8 bis 18 mm.

Die sozusagen knickfreie Relativverschiebung des ersten zum zweiten Endring ergibt sich auch bei einem Einbau des Faltenbalges in die Scheibenbremse, bei der der durchmesserkleinere zweite Endring zum ersten Endring hin verschoben wird bis etwa in einen gemeinsamen Überdeckungsbereich.

Dabei wird zumindest ein Teil der Faltungen bzw. deren Flanken deformiert, unter Beibehaltung einer Kreiskontur.

Beispielsweise bei einem Abstand der beiden Endringe zueinander von 15 mm in entspannter Stellung des Faltenbalges und Einschieben des zweiten Endringes bei einer Montage in eine Scheibenbremse unter der genannten Deformation der Flanken bzw. Faltungen ist lediglich eine Streckung von 35 mm gegenüber der entspannten Stellung erforderlich, um den Faltenbalg wie üblich um 50 mm zu strecken, bis zur Verschleißgrenze der beteiligten Verschleißteile, d.h. insbesondere der Bremsbeläge.

Ein weiterer Vorteil ergibt sich daraus, dass konzeptionsbedingt lediglich geringe Streckkräfte beim Strecken des Faltenbalges wirksam sind, die maßgeblich die Reibungskräfte bestimmen, mit denen der Faltenbalg an der Verschlussplatte und am Druckstück bzw. der Stellspindel gehalten ist.

Die bei einer Streckung des Faltenbalges maximal zu überwindende Kraft ist abhängig von der Steifigkeit der Falten, insbesondere jedoch von der Höhe der Flanken der jeweiligen Falten.

Gemäß einem weiteren Gedanken der Erfindung ist deshalb vorgesehen, die dem ersten Endring zugeordnete Flanke in ihrer Höhe so zu bemessen, dass die sich anschließende Kehre etwa mit der dem zweiten Endring abgewandten Stirnseite des ersten Endringes abschließt. Damit wird eine Minimierung der Auszugskraft bei der Auszugskraft bei der Streckung des Faltenbalges erreicht.

In an sich bekannter Weise besteht der Faltenbalg aus einem flexiblen Material, insbesondere einem Elastomer oder vergleichbar verformbarem Material, wobei zumindest der erste Endring bevorzugt formstabil ist, beispielsweise durch Einbetten eines Metallrings oder durch Anspritzen im 2-K-Verfahren eines gegenüber den Faltungen steiferen Kunststoffs.

Weitere vorteilhafte Ausbildungen sind in den Unteransprüchen gekennzeichnet.

Ein Ausführungsbeispiel eines erfindungsgemäßen Faltenbalges wird nachfolgend anhand der beigefügten Zeichnungen beschrieben.

Es zeigen:
Fig. 1 einen Teilausschnitt einer Scheibenbremse nach dem Stand der Technik in einer geschnittenen Draufsicht
Fig. 2 einen erfindungsgemäßen Faltenbalg in entspannter Stellung
Fig. 3 den Faltenbalg als Einzelheit nach einer Montage in eine Scheibenbremse mit unverschlissenen Bremsbelägen.

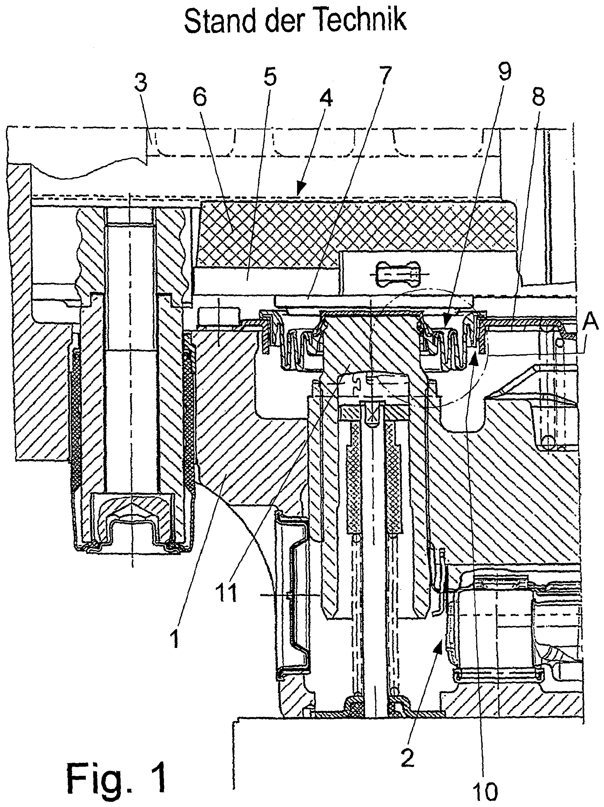

In der **Fig. 1** ist eine Hälfte einer pneumatisch oder elektromotorisch betätigbaren Scheibenbremse dargestellt, die einen als Schiebesattel ausgebildeten Bremssattel 1 aufweist, der eine Bremsscheibe 3 übergreift.

Zu beiden Seiten der Bremsscheibe 3 sind Bremsbeläge 4 angeordnet, von denen hier einer dargestellt ist, der im Funktionsfall gegen die Bremsscheibe 3 pressbar ist.

Der Bremsbelag 4 besteht aus einer Belagträgerplatte 5 und einem auf der der Bremsscheibe 3 zugewandten Seite befestigten Reibbelag 6.

Im Fall einer Bremsung wird mittels einer im Bremssattel 1 angeordneten bremshebelbetätigten Zuspanneinrichtung 2 eine Stellspindel 11 und ein am Bremsbelag 4 anliegendes Druckstück 7 der Bremsbelag 4 gegen die Bremsscheibe 3 gepresst.

Zum Ausgleich einer verschleißbedingten Änderung des Lüftspiels, d.h. des Abstands zwischen dem Reibbelag 6 und der Bremsscheibe 3, ist die als Gewindespindel ausgebildete Stellspindel 11 drehbar im Bremssattel 1 gelagert und über eine nicht dargestellte Nachstelleinrichtung bewegbar.

Zum Schutz vor Witterungseinflüssen auf die im Innern des Bremssattels 1 angeordneten Funktionsteile ist der Bremssattel 1 auf seiner der Bremsscheibe 3 zugewandten Seite durch eine Verschlussplatte 8 verschlossen, die im Austrittsbereich der Stellspindel 11 durchbrochen ist und dort eine Austrittsöffnung 10 bildet.

Zur Abdichtung der Austrittsöffnung 10 ist ein mit der Verschlussplatte 8 verbundener Faltenbalg 9 vorgesehen, der verdrehsicher mit der Verschlussplatte 8 verbunden ist, ebenso wie an dem Druckstück 7.

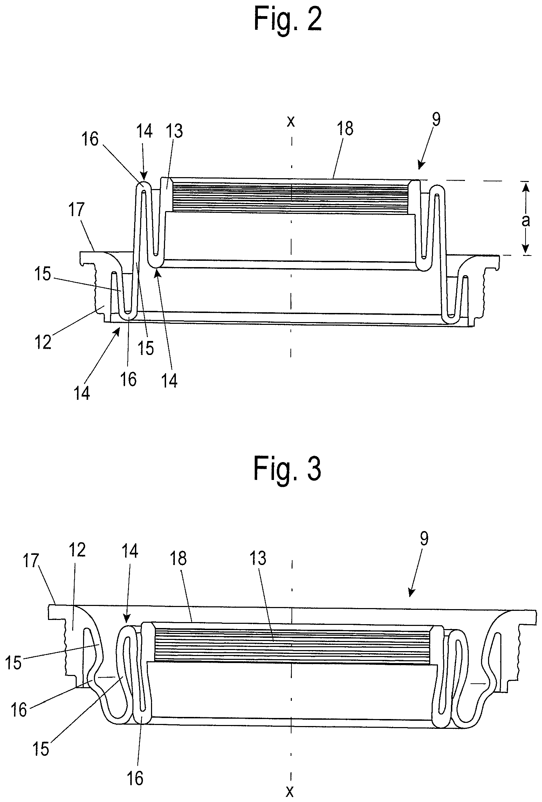

Wie insbesondere die **Fig. 2**, die einen erfindungsgemäßen Faltenbalg in entspannter Stellung zeigt, sehr deutlich wiedergibt, weist der rotationssymmeterische Faltenbalg 9 einen formstabilen ersten Endring 12 und einen zweiten, durchmesserkleineren Endring 13 auf, die durch mehrere, im Beispiel drei Faltungen 14 miteinander verbunden sind.

Jede Faltung 14 weist unter Ausbildung einer Kehre 16 zwei gegensinnig zueinander verlaufende Flanken 15 auf, die sich etwa parallel zu einer Rotationsachse X des Faltenbalges 9 erstrecken.

In der entspannten Stellung des Faltenbalges 9 ist, gemäß der Erfindung, der zweite Endring 13 mit axialem Abstand a zum ersten Endring 12 angeordnet, wobei der Abstand a mindestens 8 mm beträgt, vorzugsweise 8 bis 18 mm, besonders bevorzugt 10 bis 15 mm. Dabei ist der Abstand a definiert als das axiale Maß zwischen einer Oberkante 18 des zweiten durchmesserkleineren Endrings 13 und der zugewandten Oberkante 17 des ersten Endrings 12.

Die Höhe der sich an den ersten Endring 12 anschließenden Flanke 15 beträgt hierbei etwa 6 bis 8 mm.

In der **Fig. 3** ist eine Position des Faltenbalges 9 abgebildet, wie sie sich nach einem Einbau in eine Bremsscheibe gemäß der Fig. 1 darstellt und zwar bei unverschlissenen Bremsbelägen.

Dabei ist der zweite Endring 13 so weit zum ersten Endring 12 hin verschoben, dass beide Endringe 12, 13 etwa in einem umfänglichen Überdeckungsbereich liegen, während die Faltungen 14 bzw. deren Flanken 15 und Kehren 16, zumindest teilweise, defomiert sind, jedoch derart, dass sich in jedem Fall kreisrunde Konturen ergeben.

Diese bleiben auch erhalten, wenn der zweite Endring 13 aufgrund der axialen Verstellung der Stellspindel 11 aus dem Überdeckungsbereich mit dem ersten Endring 12 geschoben wird, beispielsweise bis zu einer Endlage, in der der Abstand a 35 mm beträgt, unter Berücksichtigung des Abstands a von 15 mm in entspannter Stellung des Faltenbalges 9, entsprechend der Fig. 2, so dass sich insgesamt ein Hub von 50 mm ergibt.

### Bezugszeichenliste

- 1: Bremssattel
- 2: Zuspanneinrichtung
- 3: Bremsscheibe
- 4: Bremsbelag
- 5: Belagträgerplatte
- 6: Reibbelag
- 7: Druckstück
- 8: Verschlussplatte
- 9: Faltenbalg
- 10: Austrittsöffnung
- 11: Stellspindel
- 12: Endring
- 13: Endring
- 14: Faltung
- 15: Flanke
- 16: Kehre
- 17: Oberkante
- 18: Oberkante

## Patentansprüche

1. Rotationssymmetrischer Faltenbalg (9) mit einem ersten Endring (12) und einem zweiten, durchmesserkleineren Endring (13) und drei Faltungen (14), die in entspannter Stellung jeweils zwei, unter Ausbildung einer Kehre (16) gegensinnig zueinander verlaufende Flanken (15) aufweisen, die sich etwa parallel zu einer Rotationsachse (X) des Faltenbalges (9) erstrecken, wobei in entspannter Stellung des Faltenbalges (9) der zweite Endring (13) mit axialem Abstand (a) zum ersten Endring (12) angeordnet ist, **dadurch gekennzeichnet, dass** in entspannter Stellung eine an den ersten Endring (12) anschließende Flanke (15) eine Höhe von 6 bis 8 mm aufweist und derart bemessen ist, dass die sich anschließende Kehre (16) etwa mit der dem zweiten Endring (13) abgewandten Stirnseite des ersten Endrings (12) abschließt, und der Abstand (a) definiert ist als das Maß zwischen der eine Oberkante (18) bildenden freien Stirnseite des zweiten Endrings (13) und der zugewandten Oberkante des ersten Endrings (12), wobei der Abstand (a) mindestens 8 mm ist, wobei eine der Oberkante des zweiten Endrings (13) zugewandte Kehre (16) und eine der Unterkante des ersten Endrings (12) zugewandte Kehre (16) durch eine Flanke (15) miteinander verbunden sind, die länger ist als die an die Endringe (12, 13) anschließenden Flanken (15).

2. Rotationssymmetrischer Faltenbalg (9) nach Anspruch 1,
**dadurch gekennzeichnet, dass**
der Abstand (a) 8 bis 18 mm, vorzugsweise 10 bis 15 mm ist.

3. Scheibenbremse für ein Nutzfahrzeug, mit einem eine Bremsscheibe (3) übergreifenden Bremssattel (1) und einer Zuspanneinrichtung (2), mit der über mindestens eine im Bremssattel (1) geführte Stellspindel (11) in Korrespondenz mit einem Druckstück (7) ein Bremsbelag (4) gegen die Bremsscheibe (3) drückbar ist, wobei die Stellspindel (11) zwischen dem Druckstück (7) und dem Bremssattel (1) von einem verformbaren Faltenbalg (9) umhüllt ist, der mittels eines ersten Endringes (12) reibschlüssig in einer Austrittsöffnung (10) des Bremssattels (1) oder einer Verschlussplatte (8) und mit einem zweiten Endring (13) reibschlüssig an der Stellspindel (11) oder dem Druckstück (7) gehalten ist,
**dadurch gekennzeichnet, dass**
der Faltenbalg (9) gemäß Anspruch 1 ausgebildet ist.

4. Scheibenbremse nach Anspruch 3,
**dadurch gekennzeichnet, dass**
der zweite Endring (13) des montierten Faltenbalgs (9) bei unverschlissenen Bremsbelägen (4) etwa im umfänglichen Überdeckungsbereich mit dem ersten Endring (12) angeordnet ist, unter Deformation zumindest eines Teils der Flanken (15) und/oder der Kehren (16).

5. Scheibenbremse nach Anspruch 3 oder 4,
**dadurch gekennzeichnet, dass**
die Flanken (15) und die Kehren (16) in jeder Stellung des Faltenbalgs (9) eine kreisrunde Kontur aufweisen.

## Claims

1. Rotationally symmetrical boot (9) having a first end ring (12) and a second end ring (13) with a smaller diameter, and three folds (14) which, in the relaxed position, have in each case two flanks (15) which run in opposite directions with respect to one another with the formation of a bend (16) and extend approximately parallel to a rotational axis (X) of the boot (9), wherein, in the relaxed position of the boot (9), the second end ring (13) is arranged at an axial distance (a) from the first end ring (12),
**characterised in that**
in the relaxed position, a flank (15) adjoining the first end ring (12) has a height of 6 to 8 mm and is dimensioned such that the adjoining bend (16) terminates approximately with that end face of the first end ring (12) which is averted from the second end ring (13) and the distance (a) is defined as the measure between that free end face of the second end ring (13) which forms an upper edge (18) and the facing upper edge of the first end ring (12), wherein the distance (a) is at least 8 mm, wherein a bend (16) facing the upper edge of the second end ring (13) and a bend (16) facing the lower edge of the first end ring (12) are connected to each other by a flank (16) which is longer than the flanks (15) adjoining the end rings (12, 13).

2. Rotationally symmetrical boot (9) according to claim 1,
**characterised in that**
the distance (a) is 8 to 18 mm, preferably 10 to 15 mm.

3. Disc brake for a commercial vehicle, having a brake calliper (1) which reaches over a brake disc (3), and having a brake application device (2), by way of which a brake pad (4) can be pressed against the brake disc (3) via at least one actuating spindle (11) which is guided in the brake calliper (1) in correspondence with a pressure piece (7), the actuating spindle (11) being enclosed between the pressure piece (7) and the brake calliper (1) by a deformable boot (9) which is held by means of a first end ring (12) in a frictionally locking manner in an outlet opening (10) of the brake calliper (1) or a closure plate (8) and by way of a second end ring (13) in a frictionally locking manner on the actuating spindle (11) or the pressure piece (7),
**characterised in that**
the boot (9) is designed according to claim 1.

4. Disc brake according to claim 3,
**characterised in that**
in the case of non-worn brake pads (4), the second end ring (13) of the mounted boot (9) is arranged approximately in the circumferential overlap region with the first end ring (12), with deformation of at least one part of the flanks (15) and/or the bends (16).

5. Disc brake according to claim 3 or 4,
**characterised in that**
the flanks (15) and the bends (16) have a circular contour in every position of the boot (9).

## Revendications

1. Soufflet (9) à plis de révolution comprenant un premier anneau (12) d'extrémité et un deuxième anneau (13) d'extrémité de diamètre plus petit et trois plis (14), qui, en position déployée, ont chacun deux flancs (15) s'étendant en sens contraire l'un à l'autre avec formation d'un rebroussement (16), qui s'étendent à peu près parallèlement à l'axe (X) de révolution du soufflet (9) à plis, dans lequel, dans l'état déployé du soufflet (9) à plis, le deuxième anneau (13) d'extrémité est disposé à distance (a) axiale du premier anneau (12) d'extrémité, **caractérisé en ce que,** dans l'état déployé, un flanc (15) se raccordant au premier anneau (12) d'extrémité a une hauteur de 6 à 8 mm et a des dimensions telles que le rebroussement (16) se raccordant se termine à peu près au côté frontal, non tourné vers le deuxième anneau (13) d'extrémité, du premier anneau (12) d'extrémité et la distance (a) est définie comme la mesure entre le un côté frontal libre formant un bord (18) supérieur du deuxième anneau (13) d'extrémité et le bord supérieur tourné vers du premier anneau (12) d'extrémité, dans lequel la distance (a) est d'au moins 8 mm, dans lequel un rebroussement (16), tourné vers le bord supérieur du deuxième anneau (13) d'extrémité et un rebroussement (16), tourné vers le bord inférieur du premier anneau (12) d'extrémité sont reliés entre eux par un flanc (15), qui est plus long que les flancs (15) se raccordant aux anneaux (12, 13) d'extrémité.

2. Soufflet (9) à plis de révolution suivant la revendication 1,
**caractérisé en ce que**
la distance (a) va de 8 à 18 mm, de préférence de 10 à 15 mm.

3. Frein à disque d'un véhicule utilitaire, comprenant un étrier (1) de frein chevauchant un disque (3) de frein et un dispositif (2) de serrage, par lequel, par au moins une broche (11) de réglage guidée dans l'étrier (1) de frein en correspondance avec une pièce (7) de pression, une garniture (4) de frein peut être poussée sur le disque (3) de frein, dans lequel la broche (11) de réglage est enveloppée entre la pièce (7) de frein et l'étrier (1) de frein d'un soufflet (9) à plis déformable, qui, au moyen d'un premier anneau (12) d'extrémité, est maintenu à frottement dans une ouverture (10) de sortie de l'étrier (1) de frein ou d'une plaque (8) de fermeture et, par un deuxième anneau (13) d'extrémité, à frottement sur la broche (11) de réglage ou la pièce (7) de pression,
**caractérisé en ce que**
le soufflet (9) à plis est constitué suivant la revendication 1.

4. Frein à disque suivant la revendication 3,
**caractérisé en ce que**
le deuxième anneau (13) d'extrémité du soufflet (9) à plis monté est, pour des garnitures (4) de frein non usées, disposées à peu près dans la partie périphérique à recouvrement avec le premier anneau (12) d'extrémité, avec déformation d'au moins une partie des flancs (15) et/ou des rebroussements (16).

5. Frein à disque suivant la revendication 3 ou 4,
**caractérisé en ce que**
les flancs (15) et les rebroussements (16) ont un contour circulaire dans chaque position du soufflet (9) à plis.
